# EUROPÄISCHE PATENTSCHRIFT

(11) **EP 2 673 540 B1**
(45) Veröffentlichungstag und Bekanntmachung des Hinweises auf die Patenterteilung: **19.10.2016**
(21) Anmeldenummer: 12715923.4
(22) Anmeldetag: 13.04.2012
(51) Int. Cl.: F16L 23/18, F16L 23/026, F16L 23/032

(54) **ANORDNUNG MIT EINEM FLANSCH**
ASSEMBLY HAVING A FLANGE
SYSTÈME COMPORTANT UNE BRIDE

(30) Priorität: 14.04.2011 DE 102011007388
(43) Veröffentlichungstag der Anmeldung: 18.12.2013
(73) Patentinhaber: Siemens Aktiengesellschaft, 80333 München (DE)
(72) Erfinder: FREUND, Wolfgang, 45899 Gelsenkirchen (DE)
(86) Internationale Anmeldenummer: PCT/EP2012/056778
(87) Internationale Veröffentlichungsnummer: WO 2012/140197

(56) Entgegenhaltungen:
- WO-A1-2009/030250
- DE-A1- 4 340 051
- DE-A1-102004 018 587
- GB-A- 577 700
- US-A- 3 620 554
- US-A- 5 904 382

## Beschreibung

Die Erfindung betrifft Anordnung mit
mindestens einem Flansch zum Anschweißen an ein Rohrende eines Rohres für eine drucktragende Flanschverbindung zweier Rohrenden, und
mit mindestens einer Dichtung und
mit einem Gegenflansch , wobei der Flansch und der Gegenflansch mittels Befestigungselementen unter Quetschung der in der Dichtungsnut angeordneten Dichtung gegeneinander verspannt sind,
wobei der Flansch sich entlang einer Umfangsrichtung um eine zentrale Achse des Rohres erstreckt, eine erste Stirnfläche in axialer Richtung des Rohrendes weist,
wobei die erste Stirnfläche eine sich in Umfangsrichtung erstreckende Dichtungsnut aufweist, welche Dichtungsnut die Stirnfläche in eine radial innen befindliche Innenfläche, die sich im Wesentlichen radial erstreckt und eben ist, und eine radial außen befindliche Außenfläche, die sich im Wesentlichen radial erstreckt und eben ist, aufteilt, wobei die Innenfläche gegenüber der Außenfläche im Mittel axial um einen Rückstand zurücksteht.

Weiterhin betrifft die Erfindung auch eine analoge Anordnung mit einem Anpassring für eine drucktragende Flanschverbindung zweier Rohrenden zur Anordnung zwischen zwei Flanschen.

Flansche der eingangs genannten Art finden regelmäßig Einsatz an drucktragenden Rohrverbindungen. Es handelt sich hierbei bevorzugt um Aufschweißflansche, Vorschweißflansche oder lose Flansche mit Aufschweißbund, insbesondere im Sinne der EN 1092-1, der DIN 2632 bis DIN 2638, des ASME B16.5 bzw. des ASME B16.47.

Aus der US 5,904,382 A sind Flanschverbindungen bekannt, bei denen die Schrauben nicht in Axialrichtung des Rohres beansprucht werden, da die Kräfte in Axialrichtung des Rohres durch umlaufende Klammern aufgenommen werden, die über definierte schiefe Ebenen Druck auf die Dichtung ausüben. Der zwischen den Flanschen planmäßig vorhandene Spalt dient nur dazu, dass die Dichtung garantiert im Krafthauptfluss liegt. Ein Ausgleich von Flanschblattschiefstellungen ist mit dieser Konstruktion weder geplant, noch möglich. Die Flanschblattdrehungen müssen fast 0 sein, damit über die schiefen Ebenen Druck von der Klammer auf die Dichtung übertragen werden kann.

Aus der DE 43 40051 A1 ist eine Flanschverbindungbekannt, bei der eine Flanschblattschiefstellung aufgrund der während der Montage auftretenden Schraubenkräfte bedingt durch die Form der Flansch-Dichtfläche zu keiner Absenkung der Kraft auf der Dichtung führt. Schiefstellungen der Flanschblätter durch Schweiß-Schrumpfspannungen laufen in genau entgegen gesetzter Richtung und können durch diese Konstruktion nicht ausgeglichen werden.

GB 577,700 A entspricht dem Oberbegriff des Anspruchs 1. Angemeldet wurde hier eine Flanschverbindung, bei der die Flanschblätter bis zum Außendurchmesser der Flanschblätter aufeinander aufliegen, also ein Drehen des Flansches planmäßig nicht zulässig ist. Der vorhandene Spalt am Innendurchmesser der Flansche dient nur dazu, dass der Innendruck am Innendurchmesser der Dichtung wirken kann und somit die Dichtung radial nach Außen drückt, was zusätzliche Dichtheit bedeutet. Ein Ausgleich von Flanschblattschiefstellungen ist mit dieser Konstruktion weder geplant, noch möglich.

In der DE 295 04 402 U1 ist die bekannte Geometrie der Jungtec-Kammprofil-Dichtung mit Weichstoff-Einlage beschrieben. Die seitlichen Kämme fixieren hierbei die Weichstoff-Einlage, die primär dichten soll. Ein Ausgleich von Flanschblattschiefstellungen ist mit dieser Konstruktion nur bedingt möglich. Bei größeren Flanschblattschiefstellungen wird die Weichstoff-Dichtung entlastet und der metallische Kamm belastet.

Aufgrund des Verschweißens der zum Einsatz kommenden Flansche mit der sich anschließenden Rohrleitung kommt es regelmäßig in Folge von Schweiß-Schrumpfspannungen zu Schiefstellungen, Balligkeiten und Welligkeiten an der Flanschdichtfläche. Wegen der hohen Ebenheitsanforderungen von Flanschabdichtungen mit O-Ringen in Ringnuten sind kostenaufwendige Nacharbeiten der Flanschdichtfläche erforderlich.

Die Erfindung hat es sich zur Aufgabe gemacht, diesen zusätzlichen Aufwand des Nacharbeitens zu verhindern.

Zur Lösung der erfindungsgemäßen Aufgabe werden Flansche, Anpassringe oder Anordnungen der eingangs genannten Art vorgeschlagen, welche die zusätzlichen Merkmale des jeweils kennzeichnenden Teils des Anspruchs 1 bzw. des Anspruchs 2 aufweisen.

Der Erfindung liegt insbesondere die Erkenntnis zu Grunde, dass die Ebenheitsabweichung an Flanschdichtflächen nahezu immer eine positive Schiefstellung am Außendurchmesser aufweisen, so dass die Flanschdichtfläche eine konvexe Konkavheit beschreibt. Diese Schiefstellung führt dazu, dass die O-Ring-Dichtung mit ihrem Vorstand aus der Dichtungsnut über die Dichtflächen heraus in einigen Fällen nicht mehr in der Lage ist die toleranzgemäße Welligkeit der Flanschdichtfläche über dem Umfang auszugleichen. Die systematische Schiefstellung insbesondere in Folge des Schweißverzugs zehrt zu ihrer Kompensation bereits einen Großteil des zur Verfügung stehenden Verformungsweges der Dichtung auf. Diese Schiefstellung ist eine häufige Ursache der Notwendigkeit einer Nacharbeitung der Flanschfläche, die vor Ort nach dem Schweißvorgang besonders aufwendig ist. Die erfindungsgemäße Ausbildung des Flansches geht von einer entsprechenden Schiefstellung der Dichtfläche des Gegenflansches aus und ist in der Weise geometrisch vorbereitet, dass diese Schiefstellung das Quetschvermögen der O-Ring-Dichtung in ihrer Anordnung in der Dichtungsnut nicht mehr dezimiert und dementsprechend die volle Verformungsmöglichkeit der O-Ring-Dichtung zur Kompensation von toleranzgemäßen Ebenheitsfehlern der gegenüberliegenden Flanschdichtfläche zur Verfügung steht. Die übergeordnete Idee der Erfindung liegt in der Überführung der eigentlich außerplanmäßigen aber erfindungsgemäß als systematisch erkannten Abweichung von Dichtflächen von Gegenflanschen in eine planmäßige Berücksichtigung dieser Abweichung durch die erfindungsgemäße Geometrie des Flansches.

Hierbei bedeutet axial im Mittel bezogen auf eine Fläche, dass diese Fläche eine flächengemittelte axiale Position aufweist und dementsprechend erfindungsgemäß diese flächengewichtete Axialposition der Innenfläche gegenüber der Außenfläche einen axialen Rückstand aufweist beziehungsweise die radiale Innenfläche gegenüber der radialen Außenfläche sich axial weiter in Richtung des Rohrendes befindet. In anderen Worten bedeutet das, dass der Flansch oder der Anpassring sich in Umfangsrichtung um eine zentrale Achse erstreckt, und sich Flächennormalen von Dichtflächen an dem Flansch oder Anpassring im Mittel im Wesentlichen parallel oder antiparallel entlang der Axialrichtung erstrecken. Die flächengemittelte Axialposition der Innenfläche steht gegenüber der Außenfläche um einen axialen Rückstand im Sinne der Flächennormalen der Innenfläche bzw. der Außenfläche zurück. Die gleiche Idee, wie dem erfindungsgemäßen Flansch liegt der erfindungsgemäßen Ausbildung eines Anpassringes zur Zwischenanordnung zwischen zwei Flanschen bzw. Gegenflanschen zu Grunde.

Im Folgenden ist die Erfindung anhand eines speziellen Ausführungsbeispiels unter Bezugnahme von Zeichnungen näher beschrieben. Es zeigen:
- Figur 1: eine Querschnittsdarstellung eines erfindungsgemäßen Flansches mit einem Gegenflansch und
- Figur 2: eine Querschnittsdarstellung eines erfindungsgemäßen Anpassungsrings mit einem Gegenflansch.

Im Folgenden beziehen sich Angaben aus dem Bereich der Geometrie der Kreisbewegung, wie beispielsweise axial, radial, Umfang, Durchmesser, Umfangsrichtung auf eine zentrale Achse, die mit dem Bezugszeichen AX in den Ausführungsbeispielen versehen ist, es sei denn, es ist anders angegeben.

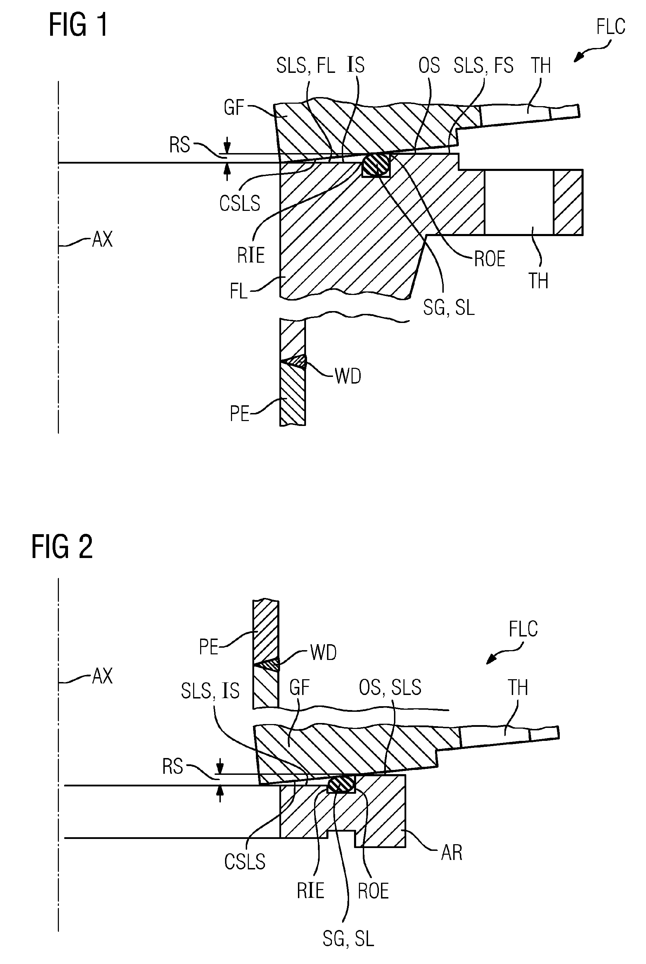

Figur 1 zeigt einen erfindungsgemäßen Flansch bzw. Vorschweißflansch in Anlehnung an DIN EN 1092-1 Typ 11. Der Flansch FL erstreckt sich im Wesentlichen um eine Achse AX in eine Umfangsrichtung und ist im Bereich einer Schweißnaht WD an ein Rohrende PE angeschweißt. In den Figuren 1, 2 ist jeweils ein als Gegenflansch GF bezeichneter Flansch teilweise abgebildet, welcher in vielen Aspekten baugleich ist mit dem Flansch FL, was durch gleiche Bezugszeichen zu Ausdruck gebracht ist. Auf einem Außendurchmesser ist der Flansch FL an verschiedenen Positionen des Umfangs mit Durchgangsbohrungen TH versehen, welche dazu dienen, mittels nicht dargestellter Schrauben den Flansch FL an dem Gegenflansch GF zu befestigen. Die Befestigungen soll in der Weise erfolgen, dass eine Dichtfläche SLS des Flansches FL gegen eine Gegendichtfläche CSLS des Gegenflansches GF gepresst wird. Die Dichtfläche SLS ist Teil einer axialen Stirnfläche FS des Flansches FL, welche axiale Stirnfläche FS von einer sich in Umfangsrichtung erstreckenden Dichtungsnut SG in einen radial innen befindlichen Bereich - eine Innenfläche IS - und einen radial außen befindlichen Bereich - eine Außenfläche OS - aufgeteilt ist. Die Dichtungsnut SG verläuft in gleicher Weise durch die Dichtfläche SL, welche hier in gleicher Weise in die Innenfläche IS und die Außenfläche OS aufgeteilt ist. Die Innenfläche IS und die Außenfläche OS bzw. die Dichtfläche SLS sind derart ausgebildet, dass sich eine Anordnung zu dem Gegenflansch GF und dessen Gegendichtfläche CSLS ergibt, in der Weise, dass eine zumindest teilweise radiale Flächenüberdeckung gegeben ist zwischen der Innenfläche IS und der Gegendichtfläche CSLS sowie der Außenfläche OS und der Gegenfläche CSLS. Die Innenfläche IS steht um einen axialen Rückstand RS axial gegenüber der Außenfläche OS an dem Flansch FL zurück, so dass sich auch im Bereich der Dichtungsnut SG eine Stufe ergibt zwischen der radial innen begrenzenden Kante RIE und der radial außen begrenzenden Kante ROE in axialer Richtung. Die Innenfläche IS und die Außenfläche OS erstrecken sich senkrecht zur Achse AX bzw. weisen keine planmäßige axiale Erstreckung auf. So ergibt sich eine senkrechte, rein radiale Erstreckung der Innenfläche IS und die Außenfläche OS zu der zentralen Achse AX. Die Gegendichtfläche CSLS des Gegenflansches GF ist gegenüber der radialen Richtung schief gestellt in Folge eines Schweißverzuges, in der Weise, dass der radial außen liegende Bereich der Gegendichtfläche CSLS gegenüber dem radial innen liegenden Bereich der Gegendichtfläche CSLS (bezüglich einer eigenen positiven Achsrichtung entgegen (antiparallel) der Richtung der zentralen Achse AX) axial zurück steht und die sich ergebende Dichtfläche CSLS in Folge dieser Schiefstellung dem gemäß in einer räumlichen Gesamtbetrachtung eine konvexe konische Form beschreibt. Die Dichtfläche SLS des Flansches FL ist in der Weise an diese Schiefstellung angepasst, dass der beschriebene Rückstand RS etwa 1 mm beträgt. Eine sich im montierten Zustand in der Dichtungsnut SG befindliche Dichtung SL wird in Folge dessen von der Gegendichtfläche CSLS derart gequetscht, dass die gesamte Verformungsmöglichkeit der Dichtung SL genutzt werden kann, die fertigungsbedingte und toleranzgemäße Unebenheit bzw. Welligkeit der Gegendichtfläche CSLS auszugleichen.

Die Figur 2 zeigt einen erfindungsgemäßen Anpassring AR, welcher sich in vergleichbarer Weise in einer Umfangsrichtung um die Achse AX erstreckt. Der Anpassring AR ist in vergleichbarer Weise, wie die Dichtfläche SLS des Flansches FL auf beiden stirnseitig befindlichen Dichtflächen SLS derart ausgebildet, dass die räumliche konvex konische Schiefstellung der Gegendichtfläche CSLS des Gegenflansches GF ausgeglichen wird. Der Anpassring AR wird in nicht näher dargestellter Weise von zwei Gegenflanschdichtflächen CSLS axial eingefasst (wobei nur eine Gegendichtfläche dargestellt ist), wobei die beiden Gegenflansche GF mittels Befestigungselementen in nicht dargestellter Weise derart gegeneinander verspannt werden, dass der Anpassring AR zwischen den beiden Gegenflanschen GF eingeklemmt ist.

Bevorzugt werden die erfindungsgemäßen Flansche FL und Anpassringe AR für Rohrnennweiten von 200mm - 2000mm eingesetzt, wobei die radiale Breite der Dichtfläche (also der radiale Kragen um das Rohr herum) im Wesentlichen konstant bleibt. Dementsprechend bleibt auch die bevorzugte Größe des axialen Rückstandes RS in etwa konstant in einem Wertebereich von 0,5mm-1,5mm, insbesondere bevorzugt 1mm+/-0,1mm. Die Dichtungsnut ist radial bevorzugt etwa 9mm+/-3mm breit.

## Patentansprüche

1. Anordnung mit
mindestens einem Flansch (FL) zum Anschweißen an ein Rohrende (PE) eines Rohres für eine drucktragende Flanschverbindung (FLC) zweier Rohrenden (PE), und
mit mindestens einer Dichtung (SL) und
mit einem Gegenflansch (GF), wobei der Flansch (FL) und der Gegenflansch (GF) mittels Befestigungselementen unter Quetschung der in einer Dichtungsnut (SG) angeordneten Dichtung (SL) gegeneinander verspannt sind,
wobei der Flansch (FL) sich entlang einer Umfangsrichtung um eine zentrale Achse (AX) des Rohres erstreckt, eine erste Stirnfläche (FS) in axialer Richtung des Rohrendes (PE) weist,
wobei die erste Stirnfläche (FS) die sich in Umfangsrichtung erstreckende Dichtungsnut (SG) aufweist, welche Dichtungsnut (SG) die Stirnfläche (FS) in eine radial innen befindliche Innenfläche (IS),
die sich im Wesentlichen radial erstreckt und eben ist, und eine radial außen befindliche Außenfläche (OS),
die sich im Wesentlichen radial erstreckt und eben ist, aufteilt, wobei die Innenfläche (IS) gegenüber der Außenfläche (OS) im Mittel axial um einen Rückstand (RS) zurücksteht,
**dadurch gekennzeichnet, dass** der Gegenflansch sich entlang der Umfangsrichtung um die zentrale Achse (AX) des Rohres erstreckt, eine erste ebene Gegendichtfläche (CSLS) in axialer Richtung weist,
wobei die Gegendichtfläche (CSLS) sowohl die Innenfläche (IS) als auch die Außenfläche (OS) zumindest teilweise überdeckt.

2. Anordnung mit
zwei Gegenflanschen (FL) zum Anschweißen an jeweils ein Rohrende (PE) eines Rohres für eine drucktragende Flanschverbindung (FLC) zweier Rohrenden (PE), und mit einem Anpassring (AR) zur Anordnung zwischen den beiden Gegenflanschen (GF),
wobei der Anpassring (AR) sich entlang einer Umfangsrichtung um eine zentrale Achse (AX) erstreckt und auf beiden axialen Stirnseiten jeweils eine erste Stirnfläche (FS) in axialer Richtung in Richtung des jeweiligen Rohrendes (PE) weist, wobei die zwei Gegenflansche (FL) und der Anpassring gegeneinander verspannt sind,
wobei mindestens eine der beiden erste Stirnflächen (FS) eine sich in Umfangsrichtung erstreckende Dichtungsnut (SG) aufweist, welche Dichtungsnut (SG) die Stirnfläche (FS) in eine radial innen befindliche Innenfläche (IS), die sich im Wesentlichen radial erstreckt und eben ist, und eine radial außen befindliche Außenfläche (OS), die sich im Wesentlichen radial erstreckt und eben ist, aufteilt,
wobei die Innenfläche (IS) gegenüber der Außenfläche (OS) im Mittel axial um einen Rückstand (RS) zurücksteht. wobei der Gegenflansch, der der ersten Stirnfläche (FS) gegenübersteht eine erste ebene Gegendichtfläche (CSLS) in axialer Richtung weist,
wobei die Gegendichtfläche (CSLS) sowohl die Innenfläche (IS) als auch die Außenfläche (OS) zumindest teilweise überdeckt.

3. Anordnung nach Anspruch 1 oder 2,
wobei der Rückstand (RS) zwischen 0,5 - 1,5mm beträgt, insbesondere 1 +/- 0,1mm beträgt.

4. Anordnung nach Anspruch 2 mit einer zweiten Dichtung, wobei der Anpassring (AR) zwischen den beiden Gegenflanschen (GF) angeordnet und verspannt ist, derart angeordnet, dass zwischen einem ersten Gegenflansch (GF) von den beiden Gegenflanschen (GF) und dem Anpassring (AR) eine Dichtung (SL) von den beiden Dichtungen (SL) und zwischen dem anderen Gegenflansch (GF) und dem Anpassring (AR) die andere Dichtung (SL) angeordnet sind.

## Claims

1. Assembly with
at least one flange (FL) for welding onto a pipe end (PE) of a pipe for a pressure-bearing flange connection (FLC) of two pipe ends (PE), and
with at least one seal (SL) and
with a mating flange (GF), wherein the flange (FL) and the mating flange (GF) are clamped against each other by means of fastening elements, squashing the seal (SL) which is arranged in a seal groove (SG),
wherein the flange (FL) extends around a central axis (AX) of the pipe along a circumferential direction, and a first end face (FS) points in the axial direction of the pipe end (PE),
wherein the first end face (FS) has the circumferentially extending seal groove (SG), which seal groove (SG) splits the end face (FS) into an inner surface (IS), located radially on the inside,
which in the main extends radially and is flat,
and an outer surface (OS), located radially on the outside, which in the main extends radially and is flat, wherein the inner surface (IS) is axially set back on average by an offset (RS) in relation to the outer surface (OS), **characterized in that** the mating flange extends around the central axis (AX) of the pipe along the circumferential direction, and a first flat mating sealing surface (CSLS) points in the axial direction,
wherein the mating sealing surface (CSLS) at least partially overlaps both the inner surface (IS) and the outer surface (OS).

2. Assembly with
two mating flanges (FL) for welding onto a pipe end (PE) in each case of a pipe for a pressure-bearing flange connection (FLC) of two pipe ends (PE), and with an adapter ring (AR) for arranging between the two mating flanges (GF),
wherein the adapter ring (AR) extends around a central axis (AX) along a circumferential direction and on both axial end faces a first end face (FS) points in each case in the axial direction in the direction of the respective pipe end (PE),
wherein the two mating flanges (FL) and the adapter ring are clamped against each other,
wherein at least one of the two first end faces (FS) has a circumferentially extending seal groove (SG), which seal groove (SG) splits the end face (FS) into an inner surface (IS), located radially on the inside, which in the main extends radially and is flat, and an outer surface (OS), located radially on the outside, which in the main extends radially and is flat,
wherein the inner surface (IS) is axially set back on average by an offset (RS) in relation to the outer surface (OS),
wherein the mating flange, which lies opposite the first end face (FS), has a first flat mating sealing surface (CSLS) in the axial direction,
wherein the mating sealing surface (CSLS) at least partially overlaps both the inner surface (IS) and the outer surface (OS).

3. Assembly according to Claim 1 or 2,
wherein the offset (RS) is between 0.5 mm and 1.5 mm, especially 1 mm +/- 0.1 mm.

4. Assembly according to Claim 2 with a second seal, wherein the adapter ring (AR) is arranged and clamped between the two mating flanges (GF) and arranged in such a way that one seal (SL) of the two seals (SL) is arranged between a first mating flange (GF) of the two mating flanges (GF) and the adapter ring (AR), and the other seal (SL) is arranged between the other mating flange (GF) and the adapter ring (AR).

## Revendications

1. Dispositif comprenant
au moins une bride (FL) à souder à une extrémité (PE) d'un tuyau pour une liaison (FLC) à bride supportant la pression de deux extrémités (PE) de tuyau et
au moins une étanchéité (FL) et une bride (GF) antagoniste, la bride (FL) et la bride (GF) antagoniste étant serrées l'une contre l'autre au moyen d'éléments de fixation avec écrasement de l'étanchéité (SL) disposée dans une rainure (SG) d'étanchéité,
la bride (SL) s'étendant le long d'une direction périphérique autour d'un axe (AX) central du tuyau, une première surface (FS) frontale étant tournée dans une direction axiale de l'extrémité (PE) du tuyau,
dans lequel la première surface (FS) frontale a la rainure (SG) d'étanchéité s'étendant dans la direction périphérique, laquelle rainure (SG) d'étanchéité subdivise la surface (FS) frontale en une surface (IS) qui se trouve à l'intérieur radialement, qui s'étend sensiblement radialement et qui est plane et en une surface (OS) qui se trouve à l'extérieur radialement et qui est plane, la surface (IS) intérieure étant, d'un retrait (RS) axialement au milieu, en retrait par rapport à la surface (OS) extérieure,
**caractérisé en ce que** la bride antagoniste s'étend dans la direction périphérique autour de l'axe (AX) central du tuyau, une première surface (CSLS) d'étanchéité antagoniste est tournée dans la direction axiale,
dans lequel la surface (CSLS) d'étanchéité antagoniste recouvre au moins en partie à la fois la surface (IS) intérieure et la surface (OS) extérieure.

2. Dispositif comprenant
deux brides (FL) antagonistes à souder à respectivement à une extrémité (PE) d'un tuyau pour une liaison (FLC) à bride supportant la pression de deux extrémités (PE) du tuyau et une bague (AR) d'adaptation à mettre entre les deux brides (GF) antagonistes,
dans lequel la bague (AR) d'adaptation s'étend le long d'une direction périphérique autour d'un axe (AX) central et tourne sur les deux côtés frontaux axiaux respectivement une première surface (FS) frontale dans la direction axiale en direction de l'extrémité (PE) respective du tuyau,
dans lequel les deux brides (FL) antagonistes et la bague d'adaptation sont serrées les unes contre les autres, dans lequel au moins l'une des deux premières surfaces (FS) frontales a une rainure (SG) d'étanchéité s'étendant dans la direction périphérique, laquelle rainure (SG) d'étanchéité subdivise la surface (FS) frontale en une surface (IS) intérieure qui se trouve à l'intérieur radialement, qui s'étend sensiblement radialement et qui est plane et en une surface (OS) extérieure se trouvant à l'intérieur radialement, qui s'étend sensiblement radialement et qui est plane,
la surface (IS) intérieure étant en retrait, d'un retrait (RS) au milieu axialement, par rapport à la surface (OS) extérieure
dans lequel la bride antagoniste, qui est opposée à la première surface (FS) frontale, tourne une première surface (CSLS) d'étanchéité antagoniste plane dans la direction axiale,
dans lequel la surface (CSLS) d'étanchéité antagoniste recouvre au moins en partie à la fois la surface (IS) intérieure et la surface (OS) extérieure.

3. Dispositif suivant la revendication 1 ou 2,
dans lequel le retrait (RS) est compris entre 0,5 et 1,5 mm, en étant notamment de 1 +/- 0,1 mm.

4. Dispositif suivant la revendication 2 ayant une deuxième étanchéité
dans lequel la bague (AR) d'adaptation est disposée et serrée entre les deux brides (GF) antagonistes disposées de manière à ce que soient disposées, entre une première bride (GF) antagoniste des deux brides (GF) antagonistes et la bague (AR) d'adaptation, l'une (SL) des deux étanchéités et, entre l'autre bride (GF) antagoniste et la bague (AR) d'adaptation, l'autre étanchéité (SL).
